(19) Europäisches Patentamt
European Patent Office
Office européen des brevets

(11) Veröffentlichungsnummer: **0 258 600 B1**

(12) **EUROPÄISCHE PATENTSCHRIFT**

(45) Veröffentlichungstag der Patentschrift: **22.01.92**

(51) Int. Cl.⁵: **C08J 9/14**, C08L 75/04, //(C08L75/04,83:04)

(21) Anmeldenummer: **87110451.9**

(22) Anmeldetag: **18.07.87**

# (54) Verfahren zur Herstellung hochelastischer, kalthärtender Polyurethanschaumstoffe.

(30) Priorität: **02.08.86 DE 3626297**

(43) Veröffentlichungstag der Anmeldung:
**09.03.88 Patentblatt 88/10**

(45) Bekanntmachung des Hinweises auf die Patenterteilung:
**22.01.92 Patentblatt 92/04**

(84) Benannte Vertragsstaaten:
**BE DE FR GB IT NL**

(56) Entgegenhaltungen:
**EP-A- 0 000 761**
**DE-A- 2 533 074**

**JOURNAL OF POLYMER SCIENCE, Teil B, Band 24, Nr. 12, Dezember 1986, Seiten 2681-2702, John Wiley & Sons, Inc.; X. YU et al.: "Poly(chloropropylmethyl-dimethylsiloxane)--Polyurethane elastomers: synthesis and properties of segmented copolymers and related Zwitterionomers"**

(73) Patentinhaber: **Th. Goldschmidt AG**
**Goldschmidtstrasse 100 Postfach 101461**
**W-4300 Essen 1(DE)**

(72) Erfinder: **Kollmeier, Hans-Joachim, Dr.**
**Barkhorstrücken 27**
**W-4300 Essen(DE)**
Erfinder: **Burkhart, Georg, Dr.**
**Barkhovenallee 22**
**W-4300 Essen(DE)**
Erfinder: **Langenhagen, Rolf-Dieter**
**Kampstrasse 5**
**W-4321 Hattingen-Niederwenigern(DE)**
Erfinder: **Lammerting, Helmut**
**Schweerstrasse 11 a**
**W-5812 Herbede(DE)**
Erfinder: **Klietsch, Bernd-Jürgen**
**Schweidnitzerstrasse 15**
**W-4660 Gelschenkirchen-Buer(DE)**

EP 0 258 600 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung hochelastischer, kalthärtender Polyurethanschaumstoffe aus mindestens difunktionellen Polyisocyanaten und mindestens difunktionellen Polyolen, Katalysatoren, Wasser und/oder Treibmitteln, organofunktionellen Polysiloxanen als Stabilisatoren und gegebenenfalls weiteren Zusatzmitteln.

Bei der Herstellung von hochelastischem Polyurethankaltschaum läßt man ein mindestens difunktionelles Polyisocyanat, z.B. Toluoldiisocyanat oder Diphenylmethandiisocyanat, mit einem Polyol reagieren, welches mindestens zwei Hydroxylgruppen je Molekül aufweist und das im Mittel einen hohen Anteil an primären Hydroxylgruppen hat. Derartige Polyole werden in der Regel dadurch hergestellt, daß man zunächst Propylenoxid an einen Startalkohol anlagert und hieran Ethylenoxid in solchen Mengen anlagert, daß mindestens 40 % der Hydroxylgruppen, vorzugsweise 70 bis 90 % der Hydroxylgruppen, in Form primärer Hydroxylgruppen vorliegen.

Bedingt durch den hohen Gehalt an primären OH-Gruppen weisen die Polyole gegenüber den Isocyanaten eine hohe Reaktivität auf. Im Gegensatz zu konventionellen Polyurethanschäumen, sogenannten Heißschäumen, wird deshalb bereits beim Aufschäumen eine hohe Vernetzungsdichte erzielt. Dies hat den Vorteil, daß die Aushärtung ohne Zufuhr von äußerer Energie erfolgt und die Zeit für die Aushärtung der Schäume insgesamt verkürzt wird. Nachteilig ist aber, daß die Tendenz zur Bildung geschlossenzelliger Schäume erhöht und der Verarbeitungsspielraum eingeengt wird. Unter Verarbeitungsspielraum sind dabei die Toleranzgrenzen zu verstehen, innerhalb derer von einer Rezeptur abgewichen werden kann, ohne daß die Ausbildung stabiler und gleichzeitig offenzelliger Schäume gefährdet wird.

Der durch die hohe Reaktivität der Verschäumungskomponenten bedingte engere Verarbeitungsspielraum und damit der enge Bereich der Ausbildung eines zwar stabilen, aber doch offenzelligen Schaumes gestattet es nicht, als Schaumstabilisatoren diejenigen Produkte zu verwenden, die bei der Herstellung von sogenannten Heißschäumen mit Erfolg eingesetzt werden. Außerdem würden derartige Stabilisatoren zu Schäumen mit unerwünscht feiner und regelmäßiger Porenstruktur führen.

Infolge der hohen Reaktivität der Verschäumungsrohstoffe ist es bei der Herstellung von hochelastischen, kaltgehärteten Polyurethanschäumen durch Anwendung höherfunktioneller Isocyanate oder Polyether und unter Mitverwendung von niedermolekularen polyfunktionellen Vernetzerverbindungen im Prinzip möglich, auch ohne Zusatz von Schaumstabilisatoren stabile Schaumkörper zu erhalten. Die auf diesem Wege erhaltenen Schaumstoffe weisen jedoch eine unregulierte Zellstruktur auf und sind zudem im wesentlichen geschlossenzellig und daher technisch nicht brauchbar.

Zur Regulierung der Zellstruktur dieser Schaumstoffe können niedermolekulare Methyl- oder Phenylmethylpolysiloxane eingesetzt werden, wie sie z.B. in der DE-PS 25 33 074 und der DE-OS 22 21 811 beschrieben sind. Es werden dadurch in einem engen Bereich ausreichend offenzellige Schäume mit regulierter Zellstruktur erhalten, jedoch ist der Verarbeitungsspielraum eng, und für viele Anwendungen sind die physikalischen Eigenschaften dieser Schaumstoffe nicht ausreichend. Infolge ihres hohen Vernetzungsgrades haben diese Schaumstoffe niedrige Werte für die Bruchdehnung und Reißfestigkeit.

Um diese Nachteile zu beseitigen, sind hochelastische Schaumstoffe entwickelt worden, die neben den reaktiven Polyolen mit überwiegend difunktionellen Isocyanaten, wie reinem Toluoldiisocyanat oder Mischungen von Toluoldiisocyanat mit 20 % oder weniger Diphenylmethandiisocyanat und geringen Anteilen an Vernetzerverbindungen als Rohstoffe, hergestellt werden. Um die Härte dieser Schaumstoffe zu verbessern, können neben den aus Propylen- und Ethylenoxid bestehenden Polyolen weiterhin solche Polyole eingesetzt werden, die zusätzlich chemisch gebunden oder physikalisch eindispergiert polymere Bestandteile enthalten, wie z.B. Polymerisate des Acrylnitrils und Styrol oder polymere Harnstoffderivate.

Rezepturen auf dieser Basis ergeben keine eigenstabilen Schäume, d.h., ohne Zusatz von Stabilisatoren fallen die Schaumstoffe nach dem Aufsteigen in sich zusammen. Die für diese Schaumstoffe erforderlichen Schaumstabilisatoren müssen demnach gegen Rückfall stabilisierend und zellregulierend wirken und in einem möglichst weiten Bereich die Bildung von offenzelligen Schäumen gewährleisten.

Zur Erzielung dieser Anforderungen sind bereits Verbindungen entwickelt worden. Dabei kann man unter den Schaumstabilisatoren des Standes der Technik zwei Gruppen unterscheiden:
Die eine Gruppe wird von Polysiloxan-Polyoxyalkylen-Copolymerisaten gebildet, wobei der Polysiloxanblock ein Molekulargewicht von 150 bis 2500 und der Polyoxyalkylenblock ein Molekulargewicht von 150 bis 1500 hat. Die Produkte sind frei von Hydroxylgruppen. Derartige Produkte und ihre Verwendung bei der Polyurethanverschäumung sind in der US-PS 3 741 917 und der US-PS 4 031 044 beschrieben.

Die andere Gruppe von Stabilisatoren umfaßt Polysiloxane, welche mit organischen Gruppen modifiziert sind. Derartige Gruppen sind die Cyanoalkylgruppe (US-PS 3 952 038), die Cyanoalkoxyalkylgruppe (DE-AS 24 02 690), die Sulfolanyloxyalkylgruppe (US-PS 4 110 272), die Morpholinoalkoxyalkylgruppe (US-PS 4

067 828) und die tert. Hydroxyalkylgruppe (US-PS 4 039 490).

Als besonders brauchbar haben sich ferner Polysiloxane erwiesen, welche den Chlormethylrest aufweisen. Diese chlormethylsubstituierten Siloxane sind als Stabilisatoren für die Herstellung von hochelastischen, kalthärtenden Polyurethanschaumstoffen in der DE-OS 27 36 138 beschrieben.

Die vorliegende Erfindung knüpft an diesen Stand der Technik an und stellt insbesondere eine Verbesserung der beim Verfahren gemäß der DE-OS 27 36 138 verwendeten chlormethylierten Siloxane dar.

Die vorerwähnten Chlormethylgruppen aufweisenden Polysiloxane haben u.a. den Nachteil, daß die zu ihrer Herstellung benötigten Ausgangsverbindungen in technischem Maßstab schwierig oder kaum erhältlich sind. Es ist zwar möglich, das monofunktionelle Dimethyl-chlormethylchlorsilan durch fotokatalysierte Halogenierung von Trimethylchlorsilan herzustellen. Jedoch bereitet die Herstellung des difunktionellen Methyl-chlormethyl-dichlorsilans erhebliche Schwierigkeiten, so daß aus wirtschaftlichen Gründen praktisch nur das chlormethylsubstituierte, monofunktionelle Silan für eine industrielle Herstellung zur Verfügung steht. Es sind deshalb bisher im Handel auch nur $\alpha,\omega$-chlormethylsubstituierte Methylpolysiloxane angeboten worden.

Überraschenderweise hat sich nun gezeigt, daß die entsprechenden chlorpropylsubstituierten Polysiloxane besser zugänglich sind und überdies hinaus in ihren stabilisierenden Eigenschaften den chlormethylsubstituierten Siloxanen überlegen sind. Es ist nun auch möglich, nicht nur $\alpha,\omega$-chlorpropylsubstituierte Siloxane herzustellen, vielmehr sind nun auch solche Siloxane wirtschaftlich herstellbar, bei denen difunktionelle, also kettenbildende Siloxyeinheiten Chlorpropylreste aufweisen. Hierdurch lassen sich die beim erfindungsgemäßen Verfahren zu verwendenden modifizierten Siloxane den durch Rezeptur und Eigenschaften vorgeschriebenen Bedingungen besser anpassen.

Gegenstand vorliegender Erfindung ist deshalb ein Verfahren zur Herstellung hochelastischer, kalthärtender Polyurethanschaumstoffe mit dem Merkmal, daß man als organofunktionelle Polysiloxane solche der allgemeinen Formel

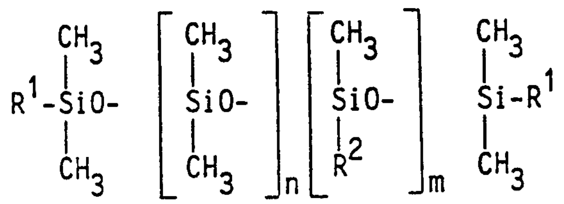
I

worin
- $R^1$ der Methylrest oder der Rest $R^2$,
- $R^2$ der Chlorpropylrest ist,
- n einen Wert von 0 bis 12 hat,
- m einen Wert von 1 bis 8 hat, wenn $R^1$ der Methylrest ist und einen Wert von 0 bis 6 hat, wenn $R^1$ der Chlorpropylrest ist,

in Mengen von 0,01 bis 2,0 Gew.-%, bezogen auf Polyole, verwendet.

Vorzugsweise verwendet man als organofunktionelle Polysiloxane solche der allgemeinen Formel

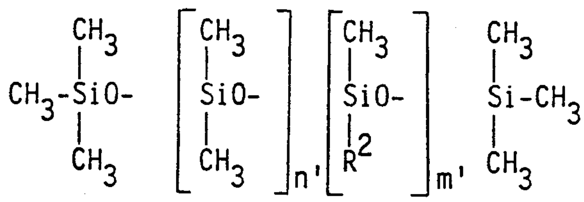
II

worin
- $R^2$ der Chlorpropylrest ist,
- n' einen Wert von 1 bis 10 und
- m' einen Wert von 1 bis 6 hat.

Die beim erfindungsgemäßen Verfahren verwendeten Polysiloxane können alleine oder zusammen mit

aus dem Stand der Technik bekannten Siloxanen verwendet werden.

Beim erfindungsgemäßen Verfahren kann man die Reaktionskomponenten bzw. Zusätze verwenden, die für die Herstellung von hochelastischen Polyurethanschäumen bekannt und üblich sind.

Als mindestens difunktionelle Polyisocyanate sind die Isomeren des Toluoldiisocyanates, die Isomeren des Diisocyanatodiphenylmethans oder oligomere Polyphenylmethylenisocyanate einsetzbar.

Die Polyole weisen mindestens 2, insbesondere 2 bis 8, Hydroxylgruppen je Molekül auf, wovon im Mittel mindestens 40 %, vorzugsweise 70 bis 90 %, hiervon primäre Hydroxylgruppen sind. Der auf jede Hydroxylgruppe entfallende Molekulargewichtsanteil (Äquivalentgewicht) beträgt 700 bis 3000. Die Polyole können ausschließlich aus Oxyethylen- und Oxypropyleneinheiten aufgebaut sein. Bis zu 30 Gew.-% anderer polymerer Bestandteile können chemisch in den Polyolen gebunden oder physikalisch in diesen dispergiert sein. Derartige andere polymere Bestandteile sind z.B. Polymerisate des Styrols oder Acrylnitrils oder Copolymerisate hiervon sowie z.B. polymere organische Harnstoffderivate.

Als Katalysatoren werden die üblichen Katalysatoren, wie z.B. organische Salze von Zinn und tertiäre Amine, eingesetzt.

Geeignete Treibmittel sind neben Wasser die an sich für diesen Zweck bekannten Fluorchlorkahlenwasserstoffe. Weitere Zusatzmittel sind Flammschutzmittel, wie z.B. Chloralkylphosphorsäureester, sowie inerte Füllstoffe und Farbpigmente.

Die beim erfindungsgemäßen Verfahren zu verwendenden organofunktionellen Polysiloxane können in an sich bekannter Weise durch Cohydrolyse und Kondensation der mono- und difunktionellen Chlorsilane hergestellt werden. Die Chlorpropylreste können durch Umsetzung der entsprechenden SiH-Bindungen aufweisenden Silane mit Allylchlorid in an sich bekannter Weise erhalten werden.

Die beim erfindungsgemäßen Verfahren entstehenden Polyurethanschaumstoffe weisen, verglichen mit Schaumstoffen, welche entsprechend dem Stand der Technik nach der DE-OS 27 36 138 hergestellt werden, eine etwas gröbere Zellstruktur auf und haben deshalb eine höhere Elastizität. Der Grad der Offenzelligkeit, gemessen als Aufdrückkraft, ist bei den erfindungsgemäß hergestellten Schäumen erhöht. Es zeigt sich insbesondere, daß diejenigen beim erfindungsgemäßen Verfahren zu verwendenden Polysiloxane, welche die Chlorpropyleinheiten seitenständig, d.h. in der Kette verteilt, aufweisen, eine bessere Ausgewogenheit zwischen stabilisierenden und zellöffnenden Eigenschaften aufweisen.

In den folgenden Beispielen werden die überlegenen Eigenschaften der beim erfindungsgemäßen Verfahren verwendeten organofunktionellen Polysiloxane als Stabilisatoren in üblichen Schaumrezepturen des Standes der Technik gezeigt.

1. Formschaum

Durchführung der Verschäumungsversuche

In einem 2-l-Becher werden die in den Rezepturen 1 bis 3 aufgeführten Komponenten, außer dem Polyisocyanat, eingewogen und mit einem Propellerrührer 60 Sek. bei 500 U/Min. vermischt. Anschließend werden die entsprechenden Polyisocyanatmengen zugegeben und das Gemisch für weitere 7 Sek. bei 2000 U/Min. gerührt. Das Reaktionsgemisch wird dann in eine auf 45 °C vorbeheizte und mit einem Trennmittel vorbehandelte Aluminiumform mit den Maßen 40 x 40 x 10 cm gegeben. Die Formenstandzeit für die genannten Rezepturen 1 bis 3 beträgt 8 Min.

Bewertung der Formschäume

Zur Bestimmung der Aufdrückkraft wird das Schaumteil behutsam der Form entnommen. Unmittelbar darauf wird am nicht angedrückten Schaumteil die Eindruckhärte bei 50 % Stauchung gemessen. Der hierzu verwendete Rundstempel hat die Fläche von 300 $cm^2$. Nach Entlastung werden die im Schaumteil vorhandenen geschlossenen Zellen durch ausgiebiges Walken vollständig geöffnet. Danach wird nochmals die Eindruckhärte bei 50 % Stauchung gemessen. Die Differenz der beiden Meßwerte in N wird als Maß für die Aufdrückkraft genommen.

Zusätzlich wird die Zahl der Zellen pro cm sowie die Gleichmäßigkeit der Zellstruktur bewertet.

Die Überprüfung der erfindungsgemäß zu verwendenden Polysiloxan-Mischpolymerisate erfolgt mit folgenden Rezepturen für hochelastische Polyurethanformschäume:

Rezeptur 1 (Formschaum)

| | |
|---|---|
| Polyol 1 | 60 |
| Polyol 2 | 40 |
| Wasser (gesamt) | 4,3 |
| Diethanolamin | 1,5 |
| TEGOAMIN ® 33[1)] | 0,5 |
| TEGOAMIN ® BDE[2)] | 0,07 |
| KOSMOS ® 21[3)] | 0,05 |
| Schaumstabilisator | variabel |
| TDI 80/20 | 44,7 |
| Index | 87 |

| Rezeptur 2 (Formschaum) | |
|---|---|
| Polyol 1 | 75 |
| Polyol 2 | 25 |
| Wasser (gesamt) | 3,1 |
| Diethanolamin | 0,7 |
| TEGOAMIN ® 33[1)] | 0,4 |
| TEGOAMIN ® BDE[2)] | 0,12 |
| KOSMOS ® 19[4)] | 0,02 |
| TDI 80/20 | 37,0 |
| Index | 100 |

Rezeptur 3 (Formschaum)

| | |
|---|---|
| Polyol 1 | 65 |
| Polyol 3 | 35 |
| Wasser (gesamt) | 3,9 |
| TEGOAMIN ® 33[1)] | 0,3 |
| TEGOAMIN ® BDE[2)] | 0,08 |
| Niax ® A 107[5)] | 0,15 |
| KOSMOS ® 21[3)] | 0,02 |
| Isocyanatgemisch aus 22 % Roh-MDI | 40,3 |
| 78 % TDI 80/20 | 84 |

Als Schaumstabilisatoren werden folgende Gemische eingesetzt:

A. 10 Gew.-% Polychlorpropyl-Polysiloxan, gelöst in 90 Gew.-% eines aus reinem Polypropylenoxid bestehenden Polyethers vom Molekulargewicht 400.

B. 10 Gew.-% Polychlorpropyl-Polysiloxan, gelöst in 83 Gew.-% des Polyethers wie bei A und 7 Gew.-% einer Polydimethylsiloxanfraktion der Kettenlänge N = 5 bis 9.

Zur Herstellung der Gemische A und B werden folgende Polysiloxane verwendet:

I Stabilisator gemäß DE-OS 27 36 138

II erfindungsgemäß Formel I n = 3, m = 2, $R^1$ = $CH_3$

III erfindungsgemäß Formel I n = 3, m = 1 $R^1$ = $CH_3$

Der Vergleichsstabilisator I wird in reiner Form, d.h. ohne Verdünnungsmittel, verwendet.

Beispiel 1

Nach der Rezeptur 1 werden unter Verwendung von Stabilisatorgemisch A mit den Polychlorpropyl-Polysiloxanen II und III sowie dem Vergleichsstabilisator I folgende Ergebnisse erzielt:

| Stabilisator | Gew.-% | Aufdrückkraft N | Zellen/cm | Elastizität (%) | Zellstruktur | Hautbeschaffenheit |
|---|---|---|---|---|---|---|
| I | 0,2 | 120 | - | - | gestört | stark gestört |
| | 0,25 | 125 | 10 | 52 | regelmäßig | stark gestört |
| | 0,35 | 130 | 11 | 53 | regelmäßig | stark gestört |
| | 0,5 | 145 | 12 | 49 | regelmäßig | stark gestört |
| II | 0,3 | 65 | - | - | gestört | gestört |
| | 0,5 | 60 | 7 | 57 | regelmäßig | leicht gestört |
| | 0,75 | 60 | 8 | 58 | regelmäßig | gut |
| | 1,0 | 63 | 8 | 60 | regelmäßig | gut |
| III | 0,3 | 60 | - | - | gestört | gestört |
| | 0,5 | 58 | 8 | 55 | regelmäßig | gut |
| | 0,75 | 7 | 8 | 55 | regelmäßig | gut |
| | 1,0 | 63 | 9 | 58 | regelmäßig | gut |

Beispiel 2

Nach der Rezeptur 1 werden unter Verwendung von Stabilisatorgemisch B mit den Polychlorpropyl-Polysiloxanen II und III sowie dem Vergleichsstabilisator I folgende Ergebnisse erzielt:

| Stabilisator | Gew.-% | Aufdrückkraft N | Zellen/cm | Elastizität (%) | Zellstruktur | Hautbeschaffenheit |
|---|---|---|---|---|---|---|
| I | 0,2 | 120 | - | - | gestört | stark gestört |
| | 0,25 | 125 | 10 | 52 | regelmäßig | stark gestört |
| | 0,35 | 130 | 11 | 53 | regelmäßig | stark gestört |
| | 0,5 | 145 | 12 | 49 | regelmäßig | stark gestört |
| II | 0,3 | 80 | 8 | - | regelmäßig | gestört |
| | 0,5 | 70 | 9 | 53 | regelmäßig | leicht gestört |
| | 0,75 | 70 | 10 | 55 | regelmäßig | gut |
| | 1,0 | 65 | 10 | 56 | regelmäßig | gut |
| III | 0,3 | 75 | 9 | 54 | regelmäßig | leicht gestört |
| | 0,5 | 74 | 9 | 53 | regelmäßig | gut |
| | 0,75 | 70 | 10 | 53 | regelmäßig | gut |
| | 1,0 | 65 | 10 | 54 | regelmäßig | gut |

Beispiel 3

Nach der Rezeptur 2 werden unter Verwendung von Stabilisatorgemisch A mit den Polychlorpropyl-Polysiloxanen II und III sowie dem Vergleichsstabilisator I folgende Ergebnisse erzielt:

| Stabilisator | Gew.-% | Aufdrückkraft N | Zellen/cm | Elastizität (%) | Zellstruktur | Hautbeschaffenheit |
|---|---|---|---|---|---|---|
| I | 0,3 | 140 | - | - | gestört | gestört |
| | 0,5 | 140 | 10 | 54 | regelmäßig | gestört |
| | 0,75 | 155 | 12 | 55 | regelmäßig | gestört |
| | 1,0 | 170 | 15 | 52 | regelmäßig | gestört |
| II | 0,5 | 110 | - | - | gestört | - |
| | 1,0 | 105 | - | - | gestört | - |
| | 1,5 | 102 | 8 | 59 | regelmäßig | gestört |
| | 2,0 | 90 | 9 | 58 | regelmäßig | gestört |
| III | 0,5 | 120 | - | - | gestört | - |
| | 1,0 | 110 | 8 | 57 | regelmäßig | gestört |
| | 1,5 | 105 | 9 | 59 | regelmäßig | gut |
| | 2,0 | 90 | 9 | 61 | regelmäßig | gut |

Beispiel 4

Nach der Rezeptur 2 werden unter Verwendung von Stabilisatorgemisch B mit den Polychlorpropyl-Polysiloxanen II und III sowie dem Vergleichsstabllisator I folgende Ergebnisse erzielt:

| Stabilisator | Gew.-% | Aufdrück-kraft N | Zellen/cm | Elastizität (%) | Zell-struktur | Hautbeschaffenheit |
|---|---|---|---|---|---|---|
| I | 0,3 | 140 | - | - | gestört | gestört |
| | 0,5 | 140 | 10 | 54 | regelmäßig | gestört |
| | 0,75 | 155 | 12 | 55 | regelmäßig | gestört |
| | 1,0 | 170 | 15 | 52 | regelmäßig | gestört |
| II | 0,5 | 90 | - | - | gestört | gestört |
| | 1,0 | 75 | 9 | 56 | regelmäßig | gestört |
| | 1,5 | 80 | 9 | 55 | regelmäßig | gestört |
| | 2,0 | 110 | 11 | 55 | regelmäßig | gestört |
| III | 0,5 | 85 | - | - | gestört | gestört |
| | 1,0 | 90 | 9 | 56 | regelmäßig | gut |
| | 1,5 | 90 | 10 | 56 | regelmäßig | gut |
| | 2,0 | 95 | 12 | 54 | regelmäßig | gut |

Beispiel 5

Nach der Rezeptur 3 werden unter Verwendung von Stabilisatorgemisch A mit den Polychlorpropyl-Polysiloxanen II und III sowie dem Vergleichsstabilisator I folgende Ergebnisse erzielt:

| Stabilisator | Gew.-% | Aufdrückkraft N | Zellen/ cm | Elastizität (%) | Zellstruktur | Hautbeschaffenheit |
|---|---|---|---|---|---|---|
| I | 0,3 | 130 | 10 | 49 | regelmäßig | gestört |
| | 0,5 | 100 | 11 | 52 | regelmäßig | gut |
| | 0,75 | 110 | 12 | 51 | regelmäßig | gut |
| | 1,0 | 130 | 14 | 48 | regelmäßig | gut |
| II | 0,5 | 120 | - | - | gestört | gestört |
| | 0,75 | 110 | 8 | 52 | regelmäßig | gestört |
| | 1,0 | 110 | 8 | 54 | regelmäßig | gut |
| | 1,5 | 100 | 9 | 52 | regelmäßig | gut |
| III | 0,5 | 130 | - | - | gestört | gestört |
| | 0,75 | 105 | 8 | 50 | regelmäßig | gut |
| | 1,0 | 100 | 9 | 50 | regelmäßig | gut |
| | 1,5 | 105 | 9 | 53 | regelmäßig | gut |

Beispiel 6

Nach der Rezeptur 3 werden unter Verwendung von Stabilisatorgemisch B mit den Polychlorpropyl-Polysiloxanen II und III sowie dem Vergleichsstabilisator I folgende Ergebnisse erzielt:

| Stabilisator | Gew.-% | Aufdrückkraft N | Zellen/ cm | Elastizität (%) | Zellstruktur | Hautbeschaffenheit |
|---|---|---|---|---|---|---|
| I | 0,3 | 130 | 10 | 49 | regelmäßig | gestört |
| | 0,5 | 100 | 11 | 52 | regelmäßig | gut |
| | 0,75 | 110 | 12 | 51 | regelmäßig | gut |
| | 1,0 | 130 | 14 | 48 | regelmäßig | gut |
| II | 0,5 | 70 | 9 | 56 | regelmäßig | gut |
| | 0,75 | 75 | 10 | 55 | regelmäßig | gut |
| | 1,0 | 80 | 10 | 55 | regelmäßig | gut |
| | 1,5 | 90 | 11 | 55 | regelmäßig | gut |
| III | 0,5 | 75 | 9 | 52 | regelmäßig | gut |
| | 0,75 | 75 | 10 | 53 | regelmäßig | gut |
| | 1,0 | 80 | 10 | 54 | regelmäßig | gut |
| | 1,5 | 85 | 12 | 52 | regelmäßig | gut |

2. Blockschaum

Versuchsdurchführung

Die Versuche werden auf einer 2-Komponenten-Admiral-Niederdruckmaschine durchgeführt. Der Polyolausstoß beträgt 10 kg/Min. Der Schäumprozeß erfolgt in einer oben offenen Box mit den Maßen 100 x 60 x 60 cm.

Bewertung der Blockschäume

Zur Bewertung des Einflusses von verschiedenen Schaumstabilisatoren bei unterschiedlichen Konzentrationen wird in den Blockschäumen die Schaumöffnung, sichtbar durch das Abblasen, qualitativ beurteilt. Die Aufdrückkraft, die Porosität der Schaumstoffe und ihre Elastizität werden nach dem Aufdrücken gemessen. Zusätzlich werden auch bei den Blockschäumen die Zahl der Zellen pro cm und die Gleichmäßigkeit der Zellstruktur bewertet. Die Messungen werden wie folgt durchgeführt:

Beurteilung des Abblasens

Unterschieden wird zwischen keinem, leichtem und gutem Abblasen. Mit einem guten Abblasen wird eine gleichmäßig über die gesamte Schaumbreite auftretende Öffnung der Kuppenhaut nach Beendigung der Steigreaktion bezeichnet.

Messung der Elastizität

Zur Anwendung kommt der Ball-Rebound-Test nach ASTM D 1564.

Messung der Porosität

Die angegebenen Werte geben den notwendigen Staudruck in mm Wassersäule an, der notwendig ist, um einen gleichbleibenden Luftstrom von 6 l/Min. durch ein 10 cm dickes Schaumstück mit den Seitenlängen 30 x 30 cm aufrechtzuerhalten. Niedrigere Meßwerte zeigen demnach eine höhere Offenzelligkeit an.

Messung der Aufdrückkraft

Zur Durchführung dieser Messung wird in einer oben offenen Box mit den Maßen 25 x 25 x 25 cm geschäumt. Nach einer zweitägigen Lagerung unter normaler Atmosphäre wird dem Päckchen in einer Höhe von 20 cm die Kuppe abgeschnitten. Gemessen wird die Eindruckstauchhärte am unberührten sowie am gut durchgewalkten Schaum. Die Differenz der ermittelten Kräfte in N ist die zum Aufdrücken der Zellen benötigte Kraft. Zum Messen der Eindruckkräfte wird ein quadratischer Stempel mit einer Fläche von 100 $cm^2$ verwendet.

Die Werte für Aufdrückkraft, Porosität und Elastizität stehen in einem engen Zusammenhang und stellen ein Maß für die Offenzelligkeit der Schaumstoffe nach der Herstellung dar. Da die beim Aufdrücken verbleibenden Reste von Zellfenstern den Luftdurchgang behindern, zeigen ursprünglich geschlossene Schaumstoffe auch nach dem Aufdrücken schlechtere Porositäts- und Elastizitätswerte.

Die Überprüfung der erfindungsgemäß zu verwendenden Polysiloxan-Mischpolymerisate erfolgt weiterhin mit folgenden Rezepturen für hochelastische Polyurethanblockschäume:

Rezeptur 4 (Blockschaum)

| | |
|---|---|
| Polyol 4 | 100 |
| Wasser (gesamt) | 3,2 |
| Diethanolamin | 1,3 |
| TEGOAMIN® BDE | 0,1 |
| TEGOAMIN® 33 | 0,2 |
| KOSMOS® 29 | 0,2 |
| Schaumstabilisator | variabel |
| T 80 | 43,3 |
| Kennzahl | 110 |

<u>Beispiel 7</u>

Nach der Rezeptur 4 werden unter Verwendung von Stabilisatorgemisch B mit dem Polychlorpropyl-Polysiloxan III sowie dem Vergleichsstabilisator I folgende Ergebnisse erzielt:

| Stabilisator | Gew.-T. | Steigzeit | Abblasen | Aufdrücken N | Elastizität (%) | Porosität | Zellen/cm |
|---|---|---|---|---|---|---|---|
| I | 0,2 | 118 | kein | 170 | 55 | 38 | 8 |
| | 0,6 | 114 | kein | 150 | 57 | 32 | 10 |
| | 1,2 | 108 | leicht | 130 | 57 | 19 | 10 |
| III | 0,2 | 125 | kein | 140 | 56 | 28 | 8 |
| | 0,6 | 108 | leicht | 90 | 58 | 20 | 9 |
| | 1,2 | 106 | stark | 80 | 59 | 11 | 9 |

Erklärung der in den Rezepturen 1 bis 4 verwendeten Rohstoffbezeichnungen:

| | |
|---|---|
| Polyol 1 | Voranol ® CP 4711, Dow Chemical OH-Zahl 35, 18 % Ethylenoxid 80 % prim. OH |
| Polyol 2 | Desmophen ® 7617, Bayer AG OH-Zahl 28, 20 % Feststoffgehalt (PHD) |
| Polyol 3 | Niax ® 34-28, Union Carbide OH-Zahl 28, 20 % Feststoffgehalt (Acrylnitril-Styrol-Mischpolymerisat) |
| Polyol 4 | Niax ® CM 11, Union Carbide OH-Zahl 32, 10 % Feststoffgehalt (Acrylnitril-Styrol-Mischpolymerisat) |
| TEGOAMIN ® 33[1)] | 33 %ige Lösung von Triethylendiamin in Dipropylenglykol, Th. Goldschmidt AG |
| TEGOAMIN ® BDE[2)] | 70 %ige Lösung von Bis-(Dimethylaminoethyl)-ether in Dipropylenglykol, Th. Goldschmidt AG |
| KOSMOS ® 21[3)] | Dibutyl-Zinn(IV)-dimercaptid-Typ, Th. Goldschmidt AG |
| KOSMOS ® 19[4)] | Dibutyl-Zinn(IV)-dilaurat-Typ, Th. Goldschmidt AG |
| Niax ® A 107[5)] | 70 %ige Lösung von Bis-(Dimethylaminoethyl)-ether-formiat in Dipropylenglykol |

Die Beispiele 1 bis 6 belegen, daß mit den beim erfindungsgemäßen Verfahren zu verwendenden Polychlorpropyl-Polysiloxanen

a) eine Stabilisierung der Schaumstoffe mit deutlich geringeren Stabilisatorkonzentrationen verglichen mit dem Vergleichsstabilisator möglich ist.

b) die Offenzelligkeit der hergestellten Schaumstoffe (Aufdrückkraft) signifikant besser ist im Vergleich mit dem chlormethylmodifizierten Produkt I.

c) die Beschaffenheit der Haut der insbesondere auf Basis von organischen Füllkörper enthaltenden Polyolen und in relativ kalten Formen (45 °C) hergestellten Schaumstoffkissen deutlich besser ist im Vergleich mit dem Vergleichsprodukt I.

Das Beispiel 7 belegt, daß zusätzlich zu den Beispielen 1 bis 6 die beschriebenen Polychlorpropyl-Polysiloxane zur Stabilisierung von hochelastischen Polyurethanblockschaumstoffen verwendet werden können.

## Patentansprüche

**1.** Verfahren zur Herstellung hochelastischer, kalthärtender Polyurethanschaumstoffe aus mindestens difunktionellen Polyisocyanaten und mindestens difunktionellen Polyolen, Katalysatoren, Wasser und/oder Treibmitteln, organofunktionellen Polysiloxanen als Stabilisatoren und gegebenenfalls weiteren Zusatzmitteln, dadurch gekennzeichnet, daß man als organofunktionelle Polysiloxane solche der allgemeinen Formel

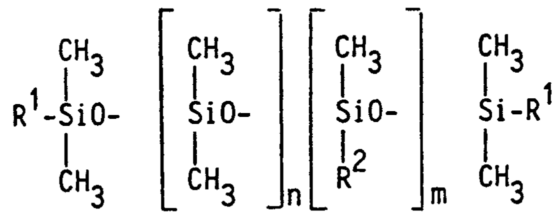

worin

- $R^1$ der Methylrest oder der Rest $R^2$,
- $R^2$ der Chlorpropylrest ist,
- n einen Wert von 0 bis 12 hat,
- m einen Wert von 1 bis 8 hat, wenn $R^1$ der Methylrest ist und einen Wert von 0 bis 6 hat, wenn $R^1$ der Chlorpropylrest ist,

in Mengen von 0,01 bis 2,0 Gew.-%, bezogen auf Polyole, verwendet.

**2.** Verfahren nach Anspruch 1, dadurch gekennzeichnet, daß man als organofunktionelle Polysiloxane solche der allgemeinen Formel

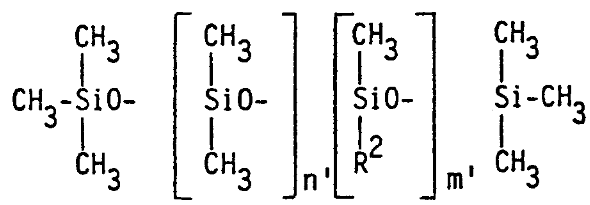

worin

- $R^2$ der Chlorpropylrest ist,
- n' einen Wert von 1 bis 10 und
- m' einen Wert von 1 bis 6 hat,

verwendet.

**Claims**

**1.** Process for producing highly elastic, cold-curing polyurethane foams from at least difunctional polyisocyanates and at least difunctional polyols, catalysts, water and/or blowing agents, organofunctional polysiloxanes as stabilisers and, if appropriate, further additives, characterised in that the organofunctional polysiloxanes used are those of the general formula

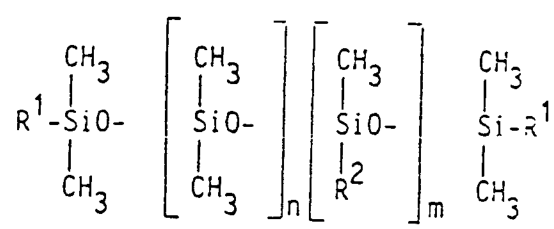

in which

- $R^1$ is the methyl radical or the radical $R^2$,
- $R^2$ is the chloropropyl radical,
- n has a value from 0 to 12,
- m has a value from 1 to 8 if $R^1$ is the methyl radical and a value from 0 to 6 if $R^1$ is the

chloropropyl radical,
in quantities from 0.01 to 2.0 % by weight, relative to polyols.

2. Process according to Claim 1, characterised in that the organofunctional polysiloxanes used are those of the general formula

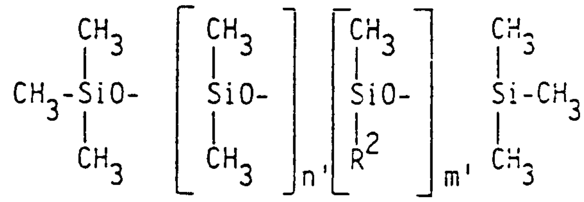

in which
- $R^2$ is the chloropropyl radical,
- n' has a value from 1 to 10 and
- m' has a value from 1 to 6.

## Revendications

1. Procédé de préparation de mousses de polyuréthane à haute élasticité et durcissant à froid, composées au moins de polyisocyanates bifonctionnels et au moins de polyols bifonctionnels, de catalyseurs, d'eau et/ou d'agents moussants, de polysiloxanes organofonctionnels comme stabilisants et éventuellement d'autres additifs, caractérisé en ce qu'on utilise des polysiloxanes organofonctionnels répondant à la formule générale

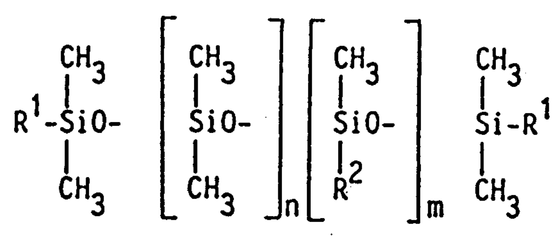

dans laquelle
- $R^1$ représente le radical méthyle ou le radical $R^2$,
- $R^2$ représente le radical chloropropyle,
- n vaut de 0 à 12,
- m vaut de 1 à 8 quand $R^1$ représente le radical méthyle et vaut de 0 à 6 quand $R^1$ représente le radical chloropropyle,

à raison de 0,01 à 2,0 % en poids, par rapport aux polyols.

2. Procédé selon la revendication 1, caractérisé en ce qu'on utilise des polysiloxanes organofonctionnels repondant à la formule générale

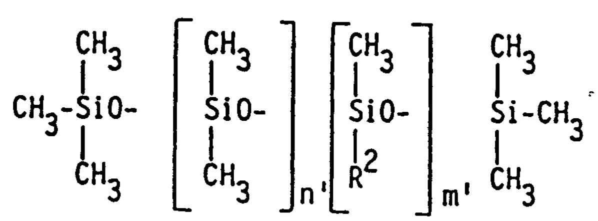

dans laquelle

- $R^2$ représente le radical chloropropyle,
- n' vaut de 1 à 10, et
- m' vaut de 1 à 6.